# EUROPÄISCHE PATENTSCHRIFT

(11) **EP 0 790 909 B1**
(45) Veröffentlichungstag und Bekanntmachung des Hinweises auf die Patenterteilung: **21.04.1999**
(21) Anmeldenummer: 95937009.9
(22) Anmeldetag: 26.10.1995
(51) Int. Cl.: B60T 8/50, B60T 8/36, G05D 16/20

(54) **DRUCKREGELVENTIL**
PRESSURE CONTROL VALVE
SOUPAPE DE REGULATION DE LA PRESSION

(30) Priorität: 18.11.1994 DE 4441150
(43) Veröffentlichungstag der Anmeldung: 27.08.1997
(73) Patentinhaber: Continental Teves AG & Co. oHG, 60488 Frankfurt (DE)
(72) Erfinder: FEIGEL, Hans-Jörg, D-61191 Rosbach (DE); KLEIN, Andreas, D-61350 Bad Homburg (DE); NEUMANN, Ulrich, D-64380 Rossdorf (DE); SCHIEL, Lothar, D-65719 Hofheim (DE)
(86) Internationale Anmeldenummer: EP9504206
(87) Internationale Veröffentlichungsnummer: WO9615928

(56) Entgegenhaltungen:
- EP-A- 0 065 451
- EP-A- 0 573 228
- EP-B- 0 353 635
- DE-C- 2 909 504
- DE-C- 3 634 349
- GB-A- 2 161 231
- PATENT ABSTRACTS OF JAPAN vol. 15 no. 339 (M-1152) ,28.August 1991 & JP,A,03 132454 (NISSAN MOTOR CO.) 5.Juni 1991,

## Beschreibung

Die Erfindung betrifft ein Druckregelventil, insbesondere elektrisch ansteuerbares Mehrwegeventil für hydraulische Kraftfahrzeugbremsanlagen mit Radschlupfregelung, nach dem Obergriff des Anspruchs 1.

Aus der DE 29 09 504 C2 ist bereits ein Druckregelventil bekannt geworden, bei dem zum Zwecke der Druckregelung der Ventilstößel als Schieberventil ausgebildet ist, um in einer ersten Schaltstellung eine Druckmittelverbindung zwischen einem ersten und einem zweiten Druckmittelanschluß herzustellen sowie in einer zweiten Schaltstellung des Ventilschiebers die vorgenannten Druckmittelanschlüsse zu trennen. In der dritten Schaltstellung öffnet der Ventilstößel ein Kugelrückschlagventil, womit ein weiterer Druckmittelanschluß zum zweiten Druckmittelanschluß freigegeben wird.

Das Druckregelventil hat jedoch den Nachteil, daß der Ventilschieber einerseits eine hohe Passungsgenauigkeit erfordert, um Herstellungs- sowie temperaturabhängige Leckageströme an der Steuerkante beherrschen zu können, andererseits ist auch keine Maßnahme vorgesehen, um im Fall eines Verklemmens des Ventilschiebers den Druckabbau im angeschlossenen Leitungssystem sicherstellen zu können.

Eine Ventilvorrichtung, die mit einem als Stromregelventil wirksamen Schieberventil versehen ist, geht aus der EP 03 53 635 B1 hervor. Das Stromregelventil weist im wesentlichen einen Kolben auf, der in Abhängigkeit von der Schaltstellung eines elektromagnetisch angesteuerten Betätigungsgliedes den Volumenstrom zwischen einer Druckmittelquelle und einem Druckmittelverbraucher regelt. Zur Erfüllung dieser Funktion verfügt der Kolben über einen relativ langen Schaft, dessen Durchgangsbohrungen mit Steuerkanten versehen sind, welche die radial in das Ventilgehäuse einmündenden Druckmittelkanäle des Druckmittelverbrauchers bzw. der Druckmittelquelle übersteuern. Unerwünschte Ringspalt-Leckageverluste im Bereich der Steuerkante sind trotz des relativ langen Kolbenschafts nicht auszuschließen, wobei auch die Aneinanderreihung des Stromregelventils mit dem elektromagnetisch ansteuerbaren Betätigungsglied zu einem erheblichen Bauvolumen der Ventilvorrichtung beiträgt. Die für Schieberventile typischen Abdichtungsprobleme treten auf.

Daher ist es die Aufgabe der Erfindung, ein Druckregelventil zu schaffen, daß mit einfachen Mitteln eine funktionssichere Druckregelung und einen kompakten, miniaturisierten Aufbau gewährleistet. Insbesondere soll der Druckmittelzulauf durch die Verwendung eines Sitzventiles sowie mit möglichst vom Bremsdruckgeber-Druck unabhängigem Volumenstrom erfolgen, der auch zur Minimierung der Ventilschaltgeräusche beiträgt. Ferner soll das Ventil eine Druckhaltephase ermöglichen und sich insgesamt durch reaktionsschnelles Schalten bei geringen Ansprechkräften auszeichnen.

Erfindungsgemäß wird diese Aufgabe durch die kennzeichnenden Merkmale des Patentanspruchs 1 gelöst, wonach ein weiteres Ventilschließglied relativ zum Ventilstößel verschiebbar im Ventilgehäuse angeordnet ist, das in einer ersten Betätigungsstellung eine ungehinderte Druckmittelverbindung zwischen dem ersten Druckmittelanschluß und dem zweiten Druckmittelanschluß herstellt, in einer weiteren Betätigungsstellung die Druckmittelverbindung zwischen dem ersten und dem zweiten Druckmittelanschluß unterbricht und das mittels einer Meßblende in der ersten Betätigungsstellung an einer Bohrungsstufe einen den Druckmittelvolumenstrom zwischen dem ersten und zweiten Druckmittelanschluß regelnden Ventilöffnungsquerschnitt aufweist.

Weitere Ziele, Merkmale, Vorteile und Anwendungsmöglichkeiten der vorliegenden Erfindung gehen aus der nachfolgenden Beschreibung eines Ausführungsbeispieles hervor.

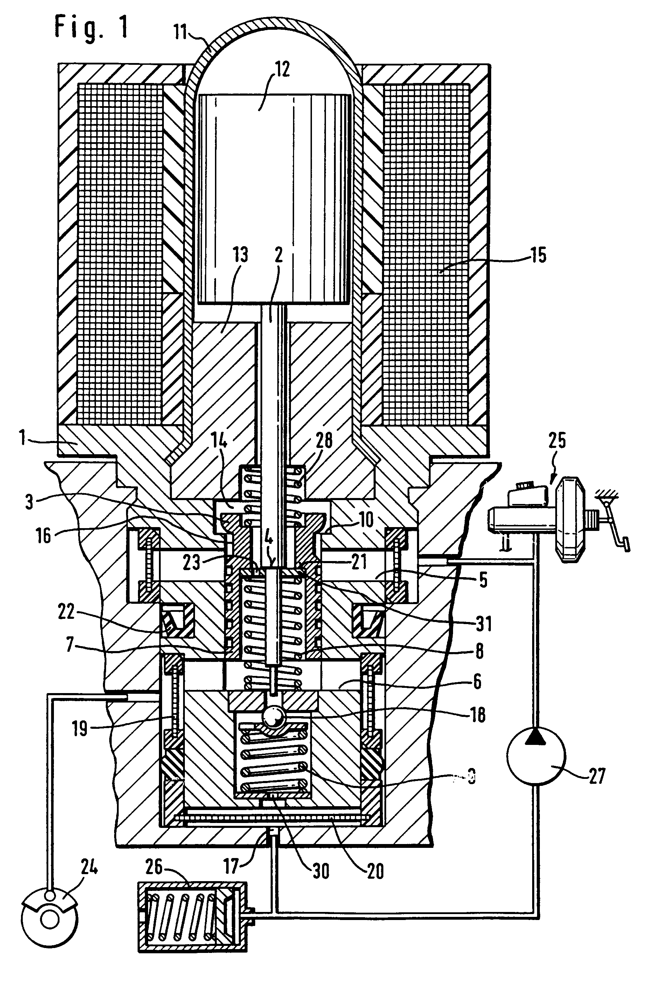

Die Fig. 1 zeigt ein in mehrfach vergrößertem Längsschnitt dargestelltes Druckregelventil, dessen Ventilgehäuse 1 in Patronenbauweise verstemmt in einem Ventilblock gehalten ist. Im aus Stahl hergestellten Ventilgehäuse 1 ist eine im Tiefziehverfahren gefertigte Ventilhülse 11 durch eine im Endbereich an der Ventilhülse 11 angebrachte Verstemmung gehalten. Für die Befestigung des Ventilgehäuse 1 und der Ventilhülse 11 bieten sich weitere form- und/oder kraftschlüssige Befestigungsverfahren an, die jedoch im Rahmen dieses Ausführungsbeispiels nicht behandelt werden. Im Dombereich der Ventilhülse 11 befindet sich der Magnetanker 12, an dem der Ventilstößel 2 angebracht ist, der sich durch eine Bohrung des Magnetkerns 13 bis in einen Druckraum 14 erstreckt. Am Magnetkern 13 stützt sich die mit dem Ventilgehäuse 1 verstemmte Wurzel der Ventilhülse 11 ab. Die Ventilhülse 11 nimmt eine Ventilspule 15 auf, die für die elektromagnetische Betätigung des Ventilstößels 2 sorgt. Der unterhalb des Magnetkerns 13 gelegene Druckraum 14 nimmt einen Ringkolben 7 auf, der metallisch gedichtet innerhalb des Druckraums 14 axial beweglich geführt ist.
Der dem Magnetkern 13 zugewandte Abschnitt des Ringkolbens 7 ist mit einer Ringnut 16 versehen, die einen Druckmitteldurchlaß zwischen einer ersten Druckmittelverbindung 5 und einer dem Magnetkern 13 benachbarten Bohrungsstufe 10 des Druckraums 14 aufweist. Die Bohrungsstufe 10 ist mittels eines am Ringkolben 7 erweiterten Abschnitts, der das weitere Ventilschließglied 3 bildet, verschließbar. Das weitere Ventilschließglied 3 ist damit in der Konstruktion eines sich an die Ringnut 16 nach außen ballig erstreckenden Sitzventilkörpers Bestandteil des Ringkolbens 7. Die von diesem Ventilschließglied 3 abgewandte Stirnfläche des Ringkolbens 7 erstreckt sich bis in den Bereich einer gleichfalls radial in den Druckraum 14 einmündenden zweiten Druckmittelverbindung 6, die im vorgeschlagenen Ausführungsbeispiel den Radbremsanschluß für eine hydraulische Bremsanlage mit Radschlupfregelung herstellt. Hingegen steht die erste Druckmittelverbindung 5 mit dem Anschluß eines Bremsdruckgebers 25 in Verbindung. Eine dritte Druckmittelverbindung 17, die von einem Ventilschließglied 18 in Richtung des Druckraums 14 abbildungsgemäß gesperrt ist, steht mit einem Druckmittelsammler 26 in Verbindung, der das vom Radbremsanschluß kommende Druckmittel speichert, um es bei Bedarf der ersten Druckmittelverbindung 5 wieder zuzuführen. Beide als Sitzventile wirksamen Ventilschließglieder 3, 18 sind zueinander diametral angeordnet und unabhängig voneinander in ihrer Wirkung entgegengesetzt betätigbar. Das oberhalb der dritten Druckmittelverbindung 17 gelegene Ventilschließglied 18 kann ausschließlich entgegengesetzt zu einer das Ventilschließglied 18 in Sperrichtung beaufschlagenden Druckfeder 9 durch elektromagnetische Betätigung des Ventilstößels 2 aufgestoßen werden, während das am Ringkolben 7 angebrachte weitere Ventilschließglied 3 mittelbar vom Ventilstößel 2, durch vorspannen einer Druckfeder 8, eine Schließbewegung auszuführen vermag, die von einer oberhalb des Ringkolbens 7 angeordneten Druckfeder 28 bewirkt wird. Hierbei erstreckt sich der Ventilstößel 2 koaxial zu den beiden entgegengesetzt zueinander wirkenden Druckfedern 8, 28 bis vor das unterhalb der Druckmittelverbindung 6 angeordnete Ventilschließglied 18. Der Ventilstößel 2 weist innerhalb des Ringkolbens 7 gelegen einen Absatz 4 auf, an dem sich eine mit einer Meßblende 23 versehene Scheibe 31 abstützt, die unter Wirkung der Druckfeder 8 gegen einen Absatz 21 im Ringkolben 7 gepreßt ist. Die Scheibe 31 kann auch einstückig durch den Ventilstößel 2 gebildet sein, wobei die Meßblende durch eine Kerbe, Ausnehmung, Abflachung oder ähnliches an dem Ventilstößel einerseits und durch den Absatz 21 andererseits gebildet werden kann. Der Ringkolben 7 hat die Funktion eines Volumenstrom-Regelventils, an dem das in der Grundstellung geöffnete Ventilschließglied 3 als integrales Bestandteil angebracht ist. Unerwünschte Leckageströme zwischen der ersten und zweiten Druckmittelverbindung 5, 6 werden vorzugsweise durch eine Spaltdichtung mit Druckentlastungsnuten an der Mantelfläche des Ringkolbens 7 klein gehalten. Die Ringnuten (Druckentlastungsnuten) an der Mantelfläche des Ringkolbens 7 verhindern ein einseitiges Andrücken an die Bohrungswandung. Die Abdichtung des Ventilgehäuses 1 (Ventilpatrone) im Ventilaufnahmeblock erfolgt mittels Selbstverstemmung und Ringdichtung. Ein Ring- und Plattenfilter 19, 20 sorgen für die Innensauberkeit des Druckregelventils.

Nachfolgend wird die Funktionsweise des Druckregelventils in Verbindung mit einer hydraulischen Kraftfahrzeugbremsanlage mit Radschlupfregelung erläutert.

Die Abbildung zeigt das Druckregelventil in der elektromagnetisch nicht erregten Schaltstellung, die bei Verwendung des Ventils für eine schlupfgeregelte Bremsanlage gleichzeitig der Bremslösestellung und der Normalbremsphase entspricht, in der eine ungehinderte Druckmittelverbindung vom Bremsdruckgeber 25 über den ersten Druckmittelanschluß 5, das Ringfilterelement 19, die Ringnut 16, das geöffnete Ventilschließglied 3 sowie über den Durchlaßquerschnitt der Meßblende 23 im Ringkolben 7 in Richtung des zweiten Druckmittelanschluß 6 besteht, der an der Radbremse 24 endet. An der Meßblende 23 stellt sich ab einem Mindestvolumenstrom Qmin eine konstante Druckdifferenz ein, die den Volumenstrom festlegt.

Abbildungsgemäß befindet sich der Ventilstößel 2 entfernt vom Ventilschließglied 18, das unter Wirkung der Druckfeder 9 die Druckmittelverbindung zwischen dem ersten und zweiten Druckmittelanschluß 5, 6 von dem zum Druckmittelsammler 26 führenden Druckmittelanschluß 17 trennt.

Beim Auftreten von unzulässig hohen Radschlupfwerten, die bei einer Überbremsung des Fahrzeugs von geeigneten Mitteln einer Signalauswertelektronik erkannt werden, erfolgt eine elektromagnetische Erregung der Spule 15, so daß der Magnetanker 12 eine Hubbewegung vollzieht, in der die Druckfeder 8 über den scheibenförmigen Anschlag am Absatz 4 des Ventilstößels 2 zusammengepreßt wird, so daß die oberhalb der Druckfeder 8 an der Stirnfläche des Ringkolbens 7 anliegende Druckfeder 28 das Ventilschließglied 3 auf die Bohrungsstufe 10 zu bewegt und verschließt. Bei einer binären Ansteuerschaltung des Ventils hebt der Ventilstößel 2 das Ventilschließglied 18, entgegen der Wirkung der Druckfeder 9, von seinem Ventilsitz im Ventilgehäuse 1, so daß das zwischen dem Druckraum 14 und der Radbremse 24 eingespannte Druckmittel durch die stromabwärts zum Ventilschließglied 18 angeordnete weitere Blende 30 in Richtung des Druckmittelsammlers 26 strömt. Der Magnetanker 12 befindet sich hierbei auf Anschlag am Magnetkern 13 oder es befindet sich dazwischen eine Antiklebescheibe. Die Kalibrierung der Blende 30 bestimmt den Druckabbaugradienten. Bei Verwendung einer Analogsteuerung zur Betätigung des Ventilstößels 2 läßt sich, im Gegensatz zur binären Schaltbetätigung des Ventilstößels 2, eine Druckhaltephase einstellen, die durch eine Zwischenstellung des Ventilstößelhubs zustandekommt, in der das obere Ventilschließglied 3 gerade geschlossen und das untere, in der Grundstellung geschlossene Ventilschließglied 18 noch nicht vom Ventilstößel 2 betätigt wird. Eine Volumenstromregelung über die Ringnut 16 erfolgt in Abhängigkeit von der Größe der Meßblende 23 in Richtung der Radbremse 24. Bei Vollaussteuerung des Magnetankers 12 vollzieht das vom Ventilstößel 2 aufgestoßene Ventilschließglied 18 ausschließlich eine Druckregelung, so daß bei Analogansteuerung des Magnetankers 12 die dem in der Grundstellung geschlossenen Ventilschließglied 18 folgende Blende 30 entfallen kann. Der Druck in der Radbremse 24 läßt sich folglich sehr schnell in Richtung des Druckmittelsammlers 26 abbauen. Eine Pumpe 27 stellt erneut das von der Radbremse 24 entweichende Druckmittel dem Bremsdruckgeber 25 bzw. dem Druckregelventil zur Verfügung.

Bedarf es während der Druckhalte- oder Druckaufbauphase einer Übersteuerung der elektrohydraulischen Druckmodulation im Sinne eines manuell über den Bremsdruckgeber 25 ausgelösten Druckabbaus (Bremspedal bewegt sich in Lösestellung), so kann jederzeit eine Druckabsenkung in der Radbremse 24 über eine am Ventilgehäuse 1 angebrachte Rückschlagmanschette 22, in Richtung der ersten Druckmittelverbindung 5, geschehen.

Soll nach vollzogener Druckabbauphase erneut Druck in der Radbremse 24 aufgebaut werden, so wird die elektromagnetische Erregung des Magnetankers 12 unterbrochen, wodurch sich unter Wirkung der Druckfeder 8 der Ringkolben 7 wieder in Richtung des Magnetkerns 13 in seine Grundstellung bewegt. Das vom Bremsdruckgeber 25 kommende und in der Ringnut 16 anstehende Druckmittel passiert erneut den Durchlaß am Ventilschließglied 3, in Abhängigkeit von einer an der Meßblende 23 konstant eingestellten Druckdifferenz mit einem konstanten Volumenstrom. Dabei bewegt sich der Ringkolben 7 in eine den Durchlaßquerschnitt an der Bohrungsstufe 10 regelnden Schnüffelstellung, in der die aus den beiden Druckfedern 8, 28 resultierende Federkraft, in Abhängigkeit von der Querschnittsfläche des Ringkolbens 7, im Gleichgewicht steht mit der an der Meßblende 23 eingestellten Druckdifferenz. Im vorliegenden Anwendungsfall für eine blockiergeschützte Bremsanlage ist die vorbeschriebene Stromregelfunktion oberhalb eines bestimmten Ansprechdrucks von wenigen Bar wirksam. Diese Stromregelfunktion hat den Vorteil, daß sich unabhängig von Druckänderungen zwischen dem Bremsdruckgeber 25 und der Radbremse 24 ein konstanter Druckaufbaugradient einstellt, der unabhängig vom jeweiligen, über dem Ansprechdruck des Stromregelventils liegenden Vordruck des Bremsdruckgebers 25 eingehalten werden kann. Geräusche, die bisher in Folge von unterschiedlich großen Druckimpulsen während der Bremsdruckregelphase auftreten können, sind somit vermieden. Die vorliegende Anordnung des als Stromregelventil wirksamen Ringkolbens 7, ermöglicht sowohl die Beibehaltung eines in der Grundstellung offen geschalteten Ventilschließgliedes 3 wie auch die Beibehaltung eines für die Druckabbauphase geeigneten Ventilschließgliedes 18, das gleichfalls als Sitzventil ausgeführt ist. Hierdurch ergibt sich ein besonders kompaktes Druckregelventil, das sowohl die Vorteile von elektromagnetisch stromlos offenen und stromlos geschlossenen Sitzventilen vereinigt, mit dem Vorteil, daß unter nahezu vollständigem Ausschluß etwaiger Leckagen eine Volumstromregelfunktion sichergestellt ist, die sich durch eine besonders geräuscharme, einfache und sichere Funktion auszeichnet. Besonders vorteilhaft ist hierin die Verwendung einer analogen Ventilansteuerung, die die bisher bekannte Stromregelfunktion bei 2/2-Wegeventilen für 3/3-Wegeventile mit druckausgeglichenem Sitzventilkörper ermöglicht. Da die Funktion des Ventilschließgliedes 3 nahezu unabhängig vom Differenzdruck zwischen Bremsdruckgeber 25 und Radbremse 24 ist, ergibt sich ein besonders schnell schaltendes Druckregelventil, so daß kleinere Ventilspulen 15 mit geringerem Leistungsbedarf zur Anwendung gelangen können. Ferner ist aufgrund der vorgeschlagenen Druckregelung zwischen dem zweiten und dem dritten Druckmittelanschluß 6, 17 eine Vereinfachung der Elektronik möglich, da keine zusätzlichen elektrischen Aktuatoren zur Betätigung des als Kugelrückschlagventils wirksamen Ventilschließgliedes 18 erforderlich sind.

### Bezugszeichenliste

- 1: Ventilgehäuse
- 2: Ventilstößel
- 3: Ventilschließglied
- 4: Absatz
- 5: Druckmittelverbindung
- 6: Druckmittelverbindung
- 7: Ringkolben
- 8: Druckfeder
- 9: Druckfeder
- 10: Bohrungsstufe
- 11: Ventilhülse
- 12: Magnetanker
- 13: Magnetkern
- 14: Druckraum
- 15: Ventilspule
- 16: Ringnut
- 17: Druckmittelanschluß
- 18: Ventilschließglied
- 19: Ringfilter
- 20: Plattenfilter
- 21: Absatz
- 22: Rückschlagmanschette
- 23: Meßblende
- 24: Radbremse
- 25: Bremsdruckgeber
- 26: Druckmittelsammler
- 27: Pumpe
- 28: Druckfeder
- 30: Blende

## Patentansprüche

1. Druckregelventil, insbesondere elektrisch ansteuerbares Mehrwegeventil für hydraulische Kraftfahrzeugbremsanlagen mit Radschlupfregelung, mit einem im Ventilgehäuse (1) axial beweglich angeordneten Ventilstößel (2), der in einer ersten Schaltstellung eine Druckmittelverbindung zwischen einem in das Ventilgehäuse (1) einmündenden ersten Druckmittelanschluß (5) und einem in das Ventilgehäuse (1) einmündenden zweiten Druckmittelanschluß (6) herstellt, der in einer zweiten Schaltstellung die Druckmittelverbindung zwischen dem ersten Druckmittelanschluß (5) und dem zweiten Druckmittelanschluß (6) trennt und der in einer dritten Schaltstellung eine Druckmittelverbindung zwischen dem zweiten Druckmittelanschluß (6) und einem dritten Druckmittelanschluß (17) herstellt, wozu ein vom Ventilstößel (2) axial verschiebbares Ventilschließglied (18) von seinem Ventilsitz abgehoben ist, dadurch **gekennzeichnet**, daß ein weiteres Ventilschließglied (3) relativ zum Ventilstößel (2) verschiebbar im Ventilgehäuse (1) angeordnet ist, das in einer ersten Schaltstellung des Ventilstößels (2) eine ungehinderte Druckmittelverbindung zwischen dem ersten Druckmittelanschluß (5) und dem zweiten Druckmittelanschluß (6) herstellt, in einer weiteren Schaltstellung die Druckmittelverbindung zwischen dem ersten und zweiten Druckmittelanschluß (5, 6) unterbricht, wobei es mittels einer Meßblende (23) in der ersten Schaltstellung an einer Bohrungsstufe (10) einen den Druckmittelvolumenstrom zwischen dem ersten und zweiten Druckmittelanschluß (5, 6) einstellenden Ventilöffnungsquerschnitt aufweist.

2. Druckregelventil nach Anspruch 1, dadurch **gekennzeichnet**, daß das weitere Ventilschließglied (3) als koaxial zum Ventilstößel (2) ausgerichtetes Sitzventil ausgebildet ist.

3. Druckregelventil nach Anspruch 1 oder 2, dadurch **gekennzeichnet**, daß das weitere Ventilschließglied (3) an einem Ringkolben (7) angebracht ist, der in einem Druckraum (14) abgedichtet axialbeweglich geführt ist.

4. Druckregelventil nach Anspruch 3, dadurch **gekennzeichnet**, daß das Ventilschließglied (3) einen als Ringnut (16) verjüngten Übergangsbereich zum Ringkolben (7) aufweist, der in einer ersten Schaltstellung eine ungehinderte hydraulische Verbindung zwischen einem ersten Druckmittelanschluß (5) und einem Druckraum (14) herstellt.

5. Druckregelventil nach Anspruch 3, dadurch **gekennzeichnet**, daß der Ringkolben (7) eine Meßblende (23) aufweist, die an Absätzen (4, 21) des Ventilstößels (2) und Ringkolbens (7) anliegt.

6. Druckregelventil nach einem der vorhergehenden Ansprüche 3 bis 5, dadurch **gekennzeichnet**, daß der Ringkolben (7) beiderseits von Druckfedern (8, 28) beaufschlagt ist, die sich an den Druckraum (14) begrenzenden Stirnflächen abstützen.

7. Druckregelventil nach Anspruch 6, dadurch **gekennzeichnet**, daß sich der Ventilstößel (2) koaxial zu den Druckfedern (8, 28) und durch den Ringkolben (7) bis vor das Ventilschließglied (18) erstreckt.

8. Druckregelventil nach Anspruch 6, dadurch **gekennzeichnet**, daß in der elektromagnetisch nicht erregten Stellung des Magnetankers (12) die Druckfeder (8) den Ringkolben (7) mit dem Ventilstößel (2) in eine die Druckmittelverbindung zwischen dem Druckmittelanschluß (5) und dem zweiten Druckmittelanschluß (6) verbindende Schaltstellung bewegt.

## Claims

1. Pressure control valve, in particular electrically operable multi-way valve for hydraulic automotive vehicle brake systems with wheel slip control, including a valve tappet (2) which is axially movably arranged in the valve housing (1) and, in a first operating position, provides a pressure fluid connection between a first pressure fluid port (5) that opens into the valve housing (1) and a second pressure fluid port (6) that opens into the valve housing (1), wherein the valve tappet, in a second operating position, separates the pressure fluid connection between the first pressure fluid port (5) and the second pressure fluid port (6) and, in a third operating position, provides a pressure fluid connection between the second pressure fluid port (6) and a third pressure fluid port (17), to which end a valve closure member (18) which is axially slidable by the valve tappet (2) is lifted from its valve seat,
**characterized** in that another valve closure member (3) is arranged in the valve housing (1) so as to be displaceable in relation to the valve tappet (2), the valve closure member providing an unimpeded pressure fluid connection between the first pressure fluid port (5) and the second pressure fluid port (6) in a first operating position of the valve tappet (2) and interrupting the pressure fluid connection between the first and the second pressure fluid port (5, 6) in another operating position, and, in the first operating position, the valve closure member having a metering orifice (23) at a bore step (10) with a valve opening cross-section which adjusts the pressure fluid volume flow between the first and the second pressure fluid port (5, 6).

2. Pressure control valve as claimed in claim 1,
**characterized** in that the second valve closure member (3) is configured as a seat valve aligned coaxially to the valve tappet (2).

3. Pressure control valve as claimed in claim 1 or claim 2,
**characterized** in that the second valve closure member (3) is fitted to an annular piston (7) which is sealed and axially movable in a pressure chamber (14).

4. Pressure control valve as claimed in claim 3,
**characterized** in that the valve closure member (3) includes a transition area, tapering as an annular groove (16), to the annular piston (7) which provides an unimpeded hydraulic connection between a first pressure fluid port (5) and a pressure chamber (14).

5. Pressure control valve as claimed in claim 3,
**characterized** in that the annular piston (7) has a metering orifice (23) which bears against steps (4, 21) of the valve tappet (2) and the annular piston (7).

6. Pressure control valve as claimed in any one of the preceding claims 3 to 5,
**characterized** in that the annular piston (7) on either end is acted upon by compression springs (8, 28) which are supported on end surfaces that confine the pressure chamber (14).

7. Pressure control valve as claimed in claim 6,
**characterized** in that the valve tappet (2) extends coaxially to the compression springs (8, 28) and through the annular piston (7) until ahead of the valve closure member (18).

8. Pressure control valve as claimed in claim 6,
**characterized** in that, in the electromagnetically non-energized position of the magnetic armature (12), the compression spring (8) moves the annular piston (7) along with the valve tappet (2) into an operating position where a pressure fluid connection between the pressure fluid port (5) and the second pressure fluid port (6) is provided.

## Revendications

1. Soupape de régulation de pression, notamment soupape de distribution à plusieurs voies pouvant être commandée électriquement, pour installations hydrauliques de freinage de véhicules automobiles avec régulation anti-patinage des roues, comprenant un poussoir de soupape (2) agencé mobile axialement dans le corps (1) de la soupape, qui, dans une première position de commande, établit une communication du fluide de pression entre un premier raccord de fluide de pression (5) qui débouche dans le corps (1) de la soupape, et un deuxième raccord de fluide de pression (6) qui débouche dans le corps (1) de la soupape, et qui, dans une deuxième position de commande, interrompt la communication de fluide de pression entre le premier raccord de fluide de pression (5) et le deuxième raccord de fluide de pression (6), tandis que, dans une troisième position de commande, il établit une communication de fluide de pression entre le deuxième raccord de fluide de pression (6) et un troisième raccord de fluide de pression (17), ce pourquoi un organe de fermeture de soupape (18) qui peut être déplacé axialement par le poussoir de soupape (2), est soulevé de son siège de soupape, caractérisée en ce qu'un organe de fermeture de soupape supplémentaire (3) est disposé mobile en translation dans le corps (1) de la soupape par rapport au poussoir de soupape (2), organe qui, dans une première position de commande du poussoir de soupape (2) établit une communication libre du fluide de pression entre le premier raccord de fluide de pression (5) et le deuxième raccord de fluide de pression (6), tandis que, dans une autre position de commande, il interrompt la communication du fluide de pression entre les premier et deuxième raccords de fluide de pression (5, 6), cependant qu'au moyen d'un orifice calibré (23), il présente, dans la première position de commande, au niveau d'un épaulement (10) de l'alésage, une section d'ouverture de soupape qui détermine le débit volumique du fluide de pression entre les premier et deuxième raccords de fluide de pression (5, 6).

2. Soupape de régulation de la pression selon la revendication 1, caractériseé en ce que l'organe de fermeture de soupape supplémentaire (3) est constitué par une soupape à siège orientée coaxialement au poussoir de soupape (2).

3. Soupape de régulation de pression selon la revendication 1 ou 2, caractérisée en ce que l'organe de fermeture de soupape supplémentaire (3) est agencé sur un piston annulaire (7) qui est guidé, mobile dans la direction axiale et à joint étanche, dans une chambre de pression (14).

4. Soupape de régulation de pression selon la revendication 3, caractérisée en ce que l'organe de fermeture de soupape (3) présente une région de passage étranglée, formée d'une gorge annulaire (16), en direction du piston annulaire (7), région qui établit une communication hydraulique libre entre un premier raccord de fluide de pression (5) et une chambre de pression (14) dans une première position de commande.

5. Soupape de régulation de pression selon la revendication 3, caractérisée en ce que le piston annulaire (7) présente un orifice calibré (23) qui est en appui contre des épaulements (4, 21) du poussoir de soupape (2) et du piston annulaire (7).

6. Soupape de régulation de pression selon une des revendications précédentes 3 à 5, caracterisée en ce que le piston annulaire (7) est chargé sur ses deux faces par des ressorts de compression (8, 28) qui prennent appui contre des surfaces frontales qui délimitent la chambre de pression (14).

7. Soupape de régulation de pression selon la revendication 6, caractérisée en ce que le poussoir de soupape (2) se prolonge jusqu'à un point situé en avant de l'organe de fermeture de soupape (18), en s'étendant coaxialement aux ressorts de compression (8, 28) et à travers le piston annulaire (7).

8. Soupape de régulation de la pression selon la revendication 6, caractérisée en ce que, dans la position non excitée électromagnétiquement de l'armature d'électro-aimant (12) le ressort de compression (8) place le piston annulaire (7), avec le poussoir de soupape (2), dans une position de commande qui établit la communication du fluide de pression entre le raccord de fluide de pression (5) et le deuxième raccord de fluide de pression (6).
